(19) Europäisches Patentamt
European Patent Office
Office européen des brevets

(11) Veröffentlichungsnummer : **0 332 017 B1**

# (12) EUROPÄISCHE PATENTSCHRIFT

(45) Veröffentlichungstag der Patentschrift : **22.04.92 Patentblatt 92/17**

(51) Int. Cl.$^5$ : **C09K 3/10**

(21) Anmeldenummer : **89103452.2**

(22) Anmeldetag : **28.02.89**

## (54) Herstellen von Abdichtungen mittels einer Dichtungsmasse.

(30) Priorität : **05.03.88 DE 3807237**

(43) Veröffentlichungstag der Anmeldung : **13.09.89 Patentblatt 89/37**

(45) Bekanntmachung des Hinweises auf die Patenterteilung : **22.04.92 Patentblatt 92/17**

(84) Benannte Vertragsstaaten : **AT BE CH DE ES FR GB IT LI NL SE**

(56) Entgegenhaltungen :
**EP-A- 0 061 822**
**DE-B- 2 005 530**
**US-A- 4 381 205**

(73) Patentinhaber : **BASF Aktiengesellschaft**
**Carl-Bosch-Strasse 38**
**W-6700 Ludwigshafen (DE)**

(72) Erfinder : **Aydin, Oral, Dr.**
**Sophienstrasse 14**
**W-6800 Mannheim 1 (DE)**
Erfinder : **Krobb, Joachim**
**Helmbachstrasse 23**
**W-6740 Landau (DE)**
Erfinder : **Goertz, Hans-Helmut, Dr.**
**Am Wurmberg 11**
**W-6713 Freinsheim (DE)**

EP 0 332 017 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft das Herstellen von Abdichtungen mittels einer Fugendichtungsmasse mit verbesserten Verarbeitungseigenschaften.

Fugendichtmassen (= Dichtstoffe = Dichtungsmassen) auf Basis von Polymerdispersionen, die auch erhebliche Mengen an anorganischen Füllstoffen enthalten, sind seit längerem bekannt. Sie werden hauptsächlich auf dem Bausektor eingesetzt.

Der Aufbau solcher Massen auf Polyacrylat-Dispersionsbasis ist z.B. in "Adhäsion" 3/1971, Seiten 90 - 93, zusammengefaßt. Allgemeine Anforderungen an Dichtungsmassen sind in verschiedenen DIN-Schriften, z.B. DIN 18540 und DIN 18545, zusammengestellt. Übliche Zusatzstoffe (zusätzlich zur Polymerdispersion) sind z.B Weichmacher, Harze, Füllstoffe, Dispergierhilfsmittel und Stabilisatoren.

Neben den Anforderungen an die mechanischen Eigenschaften der verarbeiteten Massen ist es für die Praxis wichtig, bei der Verarbeitung des Dichtstoffs ein ausreichendes Standvermögen (die Eigenschaft eines noch nicht ausgehärteten Dichtstoffes, nach der Verarbeitung in der vorgegebenen Form zu bleiben, Prüfung nach DIN 52454) und eine gute Verarbeitbarkeit (Bestimmung der Verarbeitbarkeit von Dichtstoffen nach DIN 52456) zu haben.

Um gutes Standvermögen nach DIN 52454 zu erhalten, werden Dispersionsdichtmassen oft mit pyrogenen Kieselsäuren oder mit synthetischen, organischen Additiven als Thixotropierungs- und Verdickungsmittel versetzt, wobei die Verarbeitbarkeit und die Flankenhaftung verschlechtert wird.

Aufgabe der vorliegenden Erfindung ist es, die für Dichtungsmassen eingesetzten Dispersionen rheologisch so zu modifizieren, daß die daraus hergestellten Dichtmassen neben dem guten Standvermögen eine leichte Verarbeitbarkeit bei gleichbleibend guter Flankenhaftung aufweisen.

Es wurde gefunden, daß Polymerdispersionen für Fugendichtungsmassen sich durch Zusatz von Verbindungen der allgemeinen Formel I

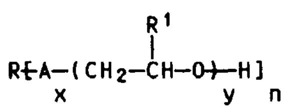

I,

wobei

R = über Sauerstoff gebundener Rest eines 2 bis 6-wertigen Alkohols mit 2 bis 10 C-Atomen,

$R^1$ = Alkyl-, Alkoxymethyl- oder Alkenyloxymethyl-Rest oder eine Mischung dieser Reste, mit jeweils 16 bis 30 C-Atomen im Alkyl-, Alkoxy- bzw. Alkenyloxy-Rest,

A = $-CH_2CH_2-O-$ (=EO) allein oder in Mischung mit

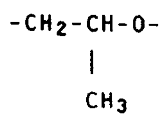

(=PO)

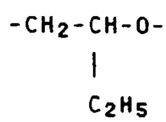

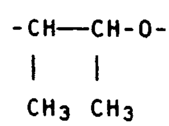

oder

$-CH_2CH_2CH_2CH_2-O-$,

wobei A zu mindestens 50, vorzugsweise mindestens 70 Mol%

$-CH_2CH_2O-$bedeutet,

x = 12 bis 500,
y = ein Durchschnittswert (gemittelt über zahlreiche Moleküle) von 0,3 bis 5
n = eine ganze Zahl von 2 bis 6
als Verdicker so modifizieren lassen, daß deren Verarbeitung als Dichtmasse vorteilhaft beeinflußt wird.

Derartige Verbindungen wurden bereits als Verdicker für hydraulische Flüssigkeiten auf wäßriger Basis (US 4 411 819, 4 649 224, 4 665 239, WO 84/00361) sowie für wäßrige Quenchflüssigkeiten (US 4 381 205) zum Abschrecken heißer Metalle vorgeschlagen. Ihre hervorragende Eignung als Verdicker für Dichtungsmassen war dadurch jedoch nicht nahegelegt.

Die erfindungsgemäß eingesetzten Verdicker sind Polyetherpolyole, die aus einem linearen oder verzweigten Niedrigalkylenoxid-Homo- oder -Copolymeren bestehen, das endständig mit 1,2-Alkylenoxiden mit 18 bis 32 Kohlenstoffatomen oder Alkyl- bzw. Alkenylglycidylethern mit 16 bis 30 Kohlenstoffatomen in der Alkyl- bzw. Alkenylkette umgesetzt ist. Das mittlere Molekulargewicht liegt im Bereich von 1 000 bis 75 000.

Solche Polyetherpolyole werden erhalten, indem man, wie in EP 61 822 und EP 116 564 beschrieben, einen mehrwertigen Alkohol (mit 2 bis 6 Hydroxylgruppen), enthaltend etwa 2 bis 10 Kohlenstoffatome, mit Ethylenoxid alleine oder mit Ethylenoxid und einem oder mehreren Alkylenoxiden mit 3 oder 4 Kohlenstoffatomen umsetzt (wobei im letzteren Fall die Umsetzung im Gemisch erfolgt, wenn ein statistisches Copolymeres gewünscht ist, und sukzessiv erfolgt, wenn ein Blockcopolymeres gewünscht ist) und anschließend diese Zwischenstufe mit 0,3 bis 5 Äquivalent (pro Hydroxylgruppe) Alkylenoxid mit 18 bis 32 Kohlenstoffatomen und endständiger Epoxidgruppe oder mit 0,3 bis 5 Äquivalent Alkyl- oder Alkenylglycidylether mit 16 bis 30 Kohlenstoffatomen im Alkyl- bzw. Alkenylrest umsetzt. Die Herstellung kann auch, wie in US 4 398 045 beschrieben, durch Umsetzung eines bereits vorliegenden Polyalkylenoxidhomo- oder copolymeren, das aus $C_2$- bzw. $C_2$ und $C_3/C_4$-Epoxiden aufgebaut ist, mit den o.g. längerkettigen Alkylenoxiden bzw. Glycidylethern erhalten werden.

Mit 2 bis 6-wertigen Alkoholen sind solche gemeint, die 2 bis 6 Hydroxylgruppen besitzen. Es handelt sich im einzelnen um Alkanpolyole, Alkenpolyole, Alkinpolyole oder Oligooxyalkylenglykole, jeweils mit 2 bis 10, vorzugsweise 2 bis 6 Kohlenstoffatomen.

Beispiele für geeignete Alkanpolyole sind Ethylenglykol, 1,2- und 1,3-Propylenglykol, Neopentylglykol, 1,2-Butandiol, 1,3-Butandiol, 1,4-Butandiol, Trimethylolpropan, Glycerin, Pentaerythrit, 2,3,4,5-Hexantetrol, Sorbit, Glucose.

Beispiele für Alkenpolyole sind 2-Buten-1,4-diol, 2-Hexen-1,4,6-triol, 1,5-Hexadien-3,4-diol, 3-Hepten-1,2,6,7-tetrol.

Beispiele für Alkinpolyole sind 2-Butin-1,4-diol, 2-Hexin-1,4,6-triol, 4-Octin-1,2,7,8-tetrol.

Beispiele für Oligooxyalkylenglykole sind Diethylenglykol, Triethylenglykol, Tetraethylenglykol, Dipropylenglykol.

Das Grundgerüst des Polyetherpolyols kann entweder nur aus Oxyethyleneinheiten aufgebaut sein oder daneben auch Oxyalkyleneinheiten mit 3 bis 4 Kohlenstoffatomen in einer Menge bis zu 50, vorzugsweise bis zu 30 Mol% enthalten. Entsprechende Alkylenoxide sind insbesondere Propylenoxid, aber auch 1,2-Butylenoxid, 2,3-Butylenoxid, ferner auch Tetrahydrofuran. Die entsprechenden Copolymeren können statistische oder Blockcopolymere sein. Unter den Copolymeren besonders bevorzugt sind solche, die Ethylenoxid und Propylenoxid im Gewichtsverhältnis 70:30 bis 95:5 enthalten.

Die Herstellung der am Kettende eingebauten längerkettigen Epoxide bzw. Glycidylether mit 18 bis 32 bzw. 19 bis 33 Kohlenstoffatomen erfolgt in üblicher Weise durch $\alpha$-Olefinoxidation bzw. durch Umsetzung von Fettalkoholen mit Epichlorhydrin.

Die Menge an längerkettigem 1,2-Alkylenoxid bzw. Glycidylether liegt im allgemeinen zwischen 0,5 und 75 Gew.%, bezogen auf das Gesamtmolekül. Das durchschnittliche molare Verhältnis von längerkettigem Epoxid bzw. Glycidylether zu jeder einzelnen Hydroxygruppe des mehrfunktionellen Alkohols soll im Bereich von 0,3 bis 5, vorzugsweise zwischen 0,5 und 2 liegen.

Beispiele für langkettige 1,2-Epoxide sind 1,2-Epoxyoctadecan, Epoxieicosan, Epoxidocosan, 1,2-Epoxytetracosan, 1,2-Epoxyhexacosan, 1,2-Epoxyoctacosan wie auch Mischungen solcher Epoxide, die käuflich erhältlich sind.

Beispiele für Alkylglycidylether sind Octadecyl-, Eicosyl-, Tetracosyl-, Ceryl-, 2-Hexyldodecyl- und 2-Octyldodecylglycidylether.

Beispiele für Alkenylglycidylether sind Oleylglycidylether oder Phytylglycidylether.

Die Polymerisate der Polymer-Dispersion können sich z.B. von Acryl- und/oder Methacrylsäureestern geradkettiger oder verzweigter Alkanole, die meist 1 bis 10, insbesondere 4 bis 8 C-Atome aufweisen, von vinylaromatischen Monomeren, wie Styrol; von Vinylestern 2 bis 10, insbesondere 2 bis 4 C-Atome enthaltender Carbonsäuren, vorzugsweise Vinylacetat und Vinylpropionat, Vinyl- und/oder Vinylidenhalogeniden und/oder 1,3-Diolefinen, vorzugsweise Butadien, ableiten. Die Polymerdispersionen haben einen Festgehalt im Bereich

von 35 bis 70, vorzugsweise 40 bis 60 Gew.%.

Neben der Polymerdispersion als Bindemittel und dem Verdicker sind als weitere Bestandteile (Zusatzstoffe) beispielsweise üblich: anorganische, wasserunlösliche Pulver sowie organische Harze als Füllstoffe, Weichmacher, Entschäumer, Dispergierhilfsmittel, Stabilisatoren (vgl. z.B. H. Lucke in "Adhäsion" 15 (1971), Berliner Fachverl. GmbH, Heft 3, S. 90 - 93).

Die erfindungsgemäßen Verdicker können im Gegensatz zu vielen üblichen im gesamten pH-Bereich von 1 bis 10 eingesetzt werden, da ihr Effekt sehr wenig vom pH-Wert abhängt. Sie können aus Wasser oder wäßrigen Mischungen von mit Wasser mischbaren Lösungsmitteln wie Alkoholen, Glykolen und aus üblichen Lösungsmitteln, in denen die Verdicker löslich sind, wie Estern, Ketonen, Kohlenwasserstoffen, Weichmachern, flüssigen Harzen oder aus flüssigen nichtionischen Tensiden wie Fettalkoholalkoxylaten, Alkylphenolalkoxylaten, Fettsäurealkoxylaten verarbeitet werden. Wegen der sehr starken Verdickungseffekte ist es vorteilhaft, mit etwa 10 %igen Verdickerlösungen zu arbeiten.

Der Anteil des Verdickers der Formel I (100 % Festgehalt) an der gesamten Formulierung liegt zwischen 0,02 und 2 Gew.%, vorzugsweise zwischen 0,05 und 1,0 Gew.%. Bei Kombination mit anderen Verdickungsmitteln, z.B. Hydroxyethylcellulose, können diese Mengen deutlich unterschritten werden. Die Verdicker werden vorzugsweise als Lösung in Wasser oder einer Kombination aus Wasser und wenigstens teilweise wassermischbaren organischen Lösemitteln eingesetzt.

Die in den Formulierungen und Beispielen angegebenen Teile und Verhältnisse beziehen sich auf das Gewicht.

Beispiele für Dichtungsmassenformulierungen:

| Teile | | Teile | |
|---|---|---|---|
| 40 | Dispersion A | 40 | Dispersion B |
| 8 | Phthalsäure-Methylglykol-Ester | 7,5 | 6-fach oxethyliertes Kresolgemisch |
| 60 | Kreide | 0,1 | 30-fach oxethylierter $C_{16-18}$-Fettalkohol |
| x | Verdicker | 0,1 | Polyacrylsäure, Natriumsalz |
| | | 0,1 | handelsüblicher Entschäumer |
| | | 5 | Dolomit, mikronisiert |
| | | 10,6 | Mikrotalk AT 1 (blättriges, magnesithaltiges Talkum) |
| | | 35,0 | Kreide, feinteilig (2 - 20 µm) |
| | | x | Verdicker |

Dispersion A eine handelsübliche 65 %ige wäßrige Dispersion eines Acrylsäureester/Acrylnitril/Vinylacetat-Polymeren mit einer Glasübergangstemperatur von ca. -40°C.

Dispersion B eine handelsübliche 60 %ige Dispersion eines Acrylsäureester/Acrylnitril-Copolymeren mit einer Glasübergangstemperatur von ca. -53°C.

Beispiele

Die Dichtungsmassen wurden in den üblichen Mischaggregaten so hergestellt, daß die Dispersion auf pH 8,0 (mit Ammoniak, konz.) gestellt und die in den Formulierungen A und B angegebenen Zusatzstoffe unter Rühren zugegeben wurden. Anschließend wurde die Masse mit den Verdickern bis zum Erreichen des Standvermögens nach DIN 52454 verdickt. (Profilabmessung 26 x 18 mm, keine Ausbuchtung).

An den fertigen Massen wurde anschließend die Spritzbarkeit nach DIN 52456 - Lochplatte d = 4 mm ermittelt.

Die Ergebnisse mit den erfindungsgemäßen Verdickern und Vergleich sind in Tab. 1 zusammengestellt.

Zur besseren Vergleichbarkeit der Ergebnisse mit verschiedenen Dispersionen und Hilfsstoffen wird die ausgespritzte Menge nach DIN 52456 auf das Vergleichsbeispiel bezogen.

Tabelle 1

Verarbeitbarkeit nach DIN 52456 Lochplatte d = 4 mm

| | Dispersion A | | | Dispersion B | | |
|---|---|---|---|---|---|---|
| Verdicker-Nr. | 1 | 2 | 3 | 1 | 4 | 5 |
| * | 0,25 | 0,5 | 0,18 | 1,0 | 0,2 | 0,43 |
| ** | x | 55 x | 26 x | x | 25 x | 30 x |

x = die ausgespritzte Menge des Vergleichs-Verdickers nach DIN 52456 (g/min)

* = zugesetzte Teile Verdicker (jeweils hergestellt nach der angegebenen Formulierung, incl. Wasser und Lösungsmittel), bezogen auf 100 Teile Polymer-Dispersion

** = ausgespritzte Menge nach DIN 52456

Vergleichs-Verdicker

Nr. 1: Kieselsäure HDK N20, Wacker-Chemie GmbH, München

| Verdicker der Formel I | | Zubereitung |
|---|---|---|
| Nr. 2: | R = 1,1,1-Trimethylolpropan-Rest, über O gebunden, | |
| | A = EO und PO im Molverhältnis 87:13 | 25%ig in |
| | $R^1$ = $C_{22-26}$-Alkyl | Butyldiglykol/$H_2O$ 1:1 |
| | x = 120 | |
| | y = 0,85 | |
| | n = 3 | |
| Nr. 3: | R = 1,1,1-Trimethylolpropan-Rest, über O gebunden, | |
| | A = EO und PO im Molverhältnis 87:13 | gemischt mit gleichen |
| | $R^1$ = $C_{22-26}$-Alkyl | Teilen zehnfach |
| | x = 120 | oxethyliertem p-Nonyl- |
| | y = 0,75 | phenol, das Ganze 75/ig |
| | n = 3 | in Wasser |
| Nr. 4: | R = 1,1,1-Trimethylolpropan-Rest, über O gebunden, | |
| | A = EO und PO im Molverhältnis 87:13 | 25%ig in Butyldi- |
| | $R^1$ = $C_{22-26}$-Alkyl | glykol/$H_2O$ 1:1 |
| | x = 120 | |
| | y = 1,5 | |
| | n = 3 | |
| Nr. 5: | R = 1,1,1-Trimethylolpropan-Rest, über O gebunden, | |
| | A = EO und PO im Molverhältnis 87:13 | gemischt mit gleichen |
| | $R^1$ = $C_{22-26}$-Alkyl | Teilen zehnfach |
| | x = 120 | oxethyliertem p-Nonyl- |
| | y = 1,5 | phenol, das Ganze 75%ig |
| | n = 3 | in Wasser |

EO = Ethylenoxid, PO = Propylenoxid

Tabelle 1 zeigt eine überraschende Überlegenheit der erfindungsgemäßen Dichtungsmassen gegenüber dem Stand der Technik (der Vergleichs-Verdicker auf Kieselsäurebasis gehört zu den besten auf dem Markt) hinsichtlich der Spritzbarkeit. Das eigentliche Überraschungsmoment besteht darin, daß die übrigen Eigenschaften, insbesondere das Standvermögen, nicht gleichzeitig verschlechtert werden. Normalerweise sind die Forderungen nach guter Spritzbarkeit und gutem Standvermögen gegenläufig, so daß stets ein Kompromiß geschlossen werden muß, weil man nicht beide gleichzeitig sehr gut einstellen kann. Genau das gelingt aber jetzt aufgrund der Erfindung. Sie gestattet es, hohe Spritzbarkeit mit hohem Standvermögen zu verbinden. Außerdem werden die übrigen Anforderungen, wie gute Flankenhaftung usw., optimal erfüllt.

## Patentansprüche

1. Verfahren zum Herstellen von Abdichtungen, wobei ein wäßriges Abdichtmittel auf Basis einer Polymerdispersion, die neben der Dispersion als Bindemittel übliche Zusatzstoffe enthält, auf die abzudichtende Stelle nach Art einer Abdichtung aufgebracht wird, dadurch gekennzeichnet, daß ein Abdichtmittel eingesetzt wird, das mit einer Verbindung der allgemeinen Formel I verdickt ist:

$$R\left[(A)_x-(CH_2-\underset{|}{\overset{R^1}{C}}H-O)_y-H\right]_n \qquad I,$$

wobei
R = über Sauerstoff gebundener Rest eines 2 bis 6-wertigen Alkohols mit 2 bis 10 C-Atomen,
$R^1$ = Alkyl-, Alkoxymethyl- oder Alkenyloxymethyl-Rest oder eine Mischung dieser Reste, mit jeweils 16 bis 30 C-Atomen im Alkyl-, Alkoxy- bzw. Alkenyloxy-Rest,
A = $-CH_2CH_2-O-$ allein oder in Mischung mit

$$-CH_2-CH(CH_3)-O-$$

$$-CH_2-CH(C_2H_5)-O-$$

$$-CH(CH_3)-CH(CH_3)-O- \quad \text{oder}$$

$-CH_2CH_2CH_2CH_2-O-$,
wobei A zu mindestens 50 Mol% $-CH_2CH_2O-$ bedeutet,
x = eine Zahl von 12 bis 500,
y = ein Durchschnittswert von 0,3 bis 5,
n = eine ganze Zahl von 2 bis 6.

2. Verfahren nach Anspruch 1, dadurch gekennzeichnet, daß das Abdichtmittel, bezogen auf die Gesamtmasse, 0,01 bis 5 Gew.% mindestens einer Verbindung der Formel I enthält.

## Claims

1. A process for the production of a seal, in which an aqueous sealing compound based on a polymer dispersion which contains, in addition to the dispersion as a binder, conventional additives is applied to the area to be sealed in the form of a seal, wherein the sealing compound used is thickened with a compound of the formula I

$$R\left[(A)_x-(CH_2-\underset{|}{\overset{R^1}{C}}H-O)_y-H\right]_n \qquad I$$

where R is a radical of a dihydric to hexahydric alcohol of 2 to 10 carbon atoms which is bonded via oxygen,

$R^1$ is alkyl, alkoxymethyl or alkenyloxymethyl or a mixture of these radicals, each having 16 to 30 carbon atoms in the alkyl, alkoxy or alkenyloxy radical, A is $-CH_2CH_2-O-$ alone or as a mixture with

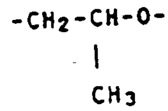

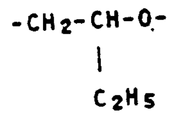

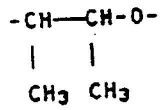

or

$-CH_2CH_2CH_2CH_2-O-$,

where A is not less than 50 mol % of $-CH_2CH_2O-$,

x is from 12 to 500,

y has a mean value of from 0. 3 to 5,

n is an integer from 2 to 6.

2. A process as claimed in claim 1, wherein the sealing compound contains from 0. 01 to 5 % by weight, based on the total compound, of one or more compounds of the formula I.

## Revendications

1. Procédé de fabrication de joints étanches, dans lequel un produit d'étanchéité aqueux, à base d'une dispersion de polymère qui contient, en dehors de la dispersion, des additifs usuels en tant que liants, est appliqué à l'endroit à rendre étanche à la manière d'une garniture d'étanchéité, caractérisé en ce qu'on utilise un produit d'étanchéité qui est épaissi par un composé de formule générale I

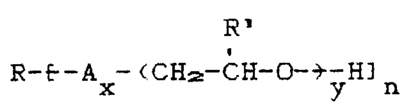

I

dans laquelle

R = Reste d'un composé à 2-10 atomes de carbone renfermant 2 à 6 fois la fonction alcool, fixé par l'intermédiaire d'un atome d'oxygène,

$R^1$ = Reste alkyle, alcoxyméthyle ou alcényloxyméthyle ou mélange de ces restes, renfermant chaque fois de 16 à 30 atomes de carbone dans le radical alkyle, alcoxy ou alcényloxy,

A = $-CH_2CH_2-O-$, seul ou en mélange avec

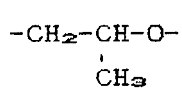

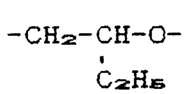

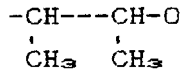 ou

$-CH_2CH_2CH_2CH_2-O-$

A signifiant $-CH_2CH_2-O-$ pour 50% en moles au moins,

x = Nombre de 12 à 500,

y = Valeur moyenne de 0,3 à 5,

n = Nombre entier de 2 à 6.

2. Procédé selon la revendication 1, caractérisé en ce que le produit d'étanchéité contient, par rapport à la masse totale, de 0,01 à 5% en poids d'au moins un composé de formule I.